(19) Europäisches Patentamt
European Patent Office
Office européen des brevets

(11) **EP 3 901 196 A1**

(12) **EUROPEAN PATENT APPLICATION**

(43) Date of publication:
**27.10.2021 Bulletin 2021/43**

(51) Int Cl.:
***C08J 3/20*** *(2006.01)* ***C08J 3/22*** *(2006.01)*
***C08J 11/04*** *(2006.01)*

(21) Application number: **20170609.0**

(22) Date of filing: **21.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Coloring GmbH**
**52074 Aachen (DE)**

(72) Inventor: **Robertz, Bernd**
**52074 Aachen (DE)**

(74) Representative: **Michalski Hüttermann & Partner Patentanwälte mbB**
**Speditionstraße 21**
**40221 Düsseldorf (DE)**

(54) **METHOD FOR PRODUCING A COLORED PLASTIC ARTICLE AND ARTICLE THEREOF**

(57) The present invention is directed to a method of manufacture of a colored plastic article, wherein the method comprises the steps:
a1) mixing a plastic basis material with a color-locker masterbatch,
wherein the color-locker masterbatch comprises:
- a plastic basis material and/or a carrier
- a locker agent, and
- a dye, wherein at least 80 % of the dye are molecularly solved in the plastic basis material or in the carrier; or

a2) mixing a plastic basis material with a color masterbatch and with a locker masterbatch,
wherein the color masterbatch comprises:
- plastic basis material and/or a carrier,
- a dye, wherein at least 80 % of the dye are molecularly solved in the plastic basis material or in the carrier; and wherein the locker masterbatch comprises:
- plastic basis material and/or a carrier,
- a locker agent;

b) producing the colored plastic article by a plastic forming processing method.

Furthermore, the present invention is directed to a plastic article produced according to the above method.

Further, the present invention is directed to a method for decolorizing of the above plastic article.

EP 3 901 196 A1

## Description

The present invention relates to a method for producing a colored plastic article and to an article produced by said method.

## BACKGROUND OF THE INVENTION

Plastic articles, such as packaging and containers, are widely used in daily life since they are easy to manufacture, rather inexpensive and lightweight. It is often desired that the plastic article has a specific color.

The coloring of plastics is usually achieved by using color master batches, colored micro granules, so-called dry liquid colors or liquid colors. Colored plastic components can for example be produced from color master batch concentrates blended into a polymer prior to molding or extruding. The selection of the specific coloring method may vary based on economics, secondary operations and specific requirements of the end application.

The selection of the pigments and/or dyes in the color master batch depends not only on the desired color, but also on the plastic, on application, and the associated requirements, such as the use of the plastic article. In sensitive areas, such as food packaging, contamination of the filling goods by a substance in the packaging must be avoided at all costs. Hence, it is important that the dyes and/or pigments used, are stable and do not migrate from the plastic into the filling good under the conditions in which the plastic article is used. For dyes, which are predominantly present in the colored plastic in a molecularly solved state, the prevention of migration is generally achieved by using dyes with a high molecular weight.

Even though dyes with a high molecular weight help producing highly color stable plastic articles, they are a disadvantage in the recycling process of the plastic article, as they cannot be removed from the plastic during mechanical recycling. The plastic articles may only be recycled at great expense by separating the articles according to their color, in order to achieve high quality colored recycled material. When colorful plastics are mixed during regranulation, recyclates with undesirable color tones (brown, grey, black) result, so that these recyclates can only be used to a very limited extent. Alternatively, the dyes within the plastic may be chemically modified for example by strong oxidation or reduction processes such that the dyes lose their chromophoric property. However, the destroyed dye compounds remain in the plastic and thus limit the use of the recylate. Furthermore, the oxidation or reduction agents are very aggressive and need to be used in high amounts, which is not environmentally friendly. Although it is possible to dissolve the plastics and dyes in chemical recycling by dissolving the colored plastic in suitable solvents, the effort involved is considerable and the use of organic solvents contradicts the idea of sustainability.

In other words, environmentally friendly and high-quality recycling depends on dyes that can easily be removed from the colored plastic article. This goal may be achieved by dyes with a low molecular weight, and especially with dyes which are molecularly dissolved and/or very finely dispersed in the plastic. However, since these dyes tend to migrate in the plastic even to the point of efflorescence from the plastic, their use for producing plastic articles and especially for producing food packages is very limited.

Accordingly, there is a need to enhance the color stability of plastic articles produced with dyes with a low molecular weight, in order to provide plastics article that are easily recyclable and still usable in sensitive areas, where a high color stability is needed.

## SUMMARY OF THE INVENTION

It is an object of the invention to provide a method of manufacture of a colored plastic article, wherein the method comprises the steps:

a1) mixing a plastic basis material with a color-locker masterbatch,
wherein the color-locker masterbatch comprises:

- a plastic basis material and/or a carrier
- a locker agent, and
- a dye, wherein at least 80 % of the dye are molecularly solved in the plastic basis material or in the carrier; or

a2) mixing a plastic basis material with a color masterbatch and with a locker masterbatch, wherein the color masterbatch comprises:

- plastic basis material and/or a carrier,
- a dye, wherein at least 80 % of the dye are molecularly solved in the plastic basis material or in the carrier; and

wherein the locker masterbatch comprises:

- plastic basis material and/or a carrier,
- a locker agent;

b) producing the colored plastic article by a plastic forming processing method,

wherein the plastic basis material is based on a polar polymer or on a polymer blend comprising at least 0.5 wt.-% of a polar polymer wherein the polar polymer has a molecular weight Mw ≥ 1000 g/mol and has at least 5 wt.-% of heteroatoms based on the molecular weight of the polar polymer, and wherein heteroatoms are any atoms except C and H atoms; or
the plastic basis material is based on a non-polar polymer and the carrier or on a polymer blend comprising at least 99.5 wt.-% of a non-polar polymer and the carrier, wherein the non-polar polymer has a molecular weight Mw ≥ 1000 g/mol and has less than 5 wt.-% of heteroatoms based on the molecular weight of the non-polar polymer;
wherein the carrier is a polar compound or a blend comprising at least 10 wt.-% of a polar-compound or mixtures thereof, and wherein the polar-compound has a molecular weight Mw < 1000 g/mol and has at least 5 wt.-% of heteroatoms based on the molecular weight of the polar compound,
wherein the dye has a molecular weight Mw in the range of about ≥ 250 g/mol to about ≤ 750 g/mol,
wherein the locker agent is able to reversibly form a bond to the dye,
and wherein the locker agent is selected from the group of acidic locker agents comprising acidic additives, acidic oligomers and/or acidic polymers, polyacids, and anionic polyelectrolytes; or
wherein the locker agent is selected from the group of basic locker agents comprising basic additives, basic oligomers and/or basic polymers, polybases, and cationic polyelectrolytes; or
wherein the locker agent is selected from the group comprising metal compounds.

The basic idea of the invention is to use a locker agent in the plastic to hinder the migration of the dye under use conditions. In the plastic, the locker agent reversibly forms a bond to the dye such that the dye and locker agent form loose pairs or groups. Thus, the molecular weight of the dyelocker pair or group is enhanced and the migration tendency of the dye is strongly reduced. Hence, a highly color stable plastic article is achieved.

According to a preferred embodiment the bond between the locker agent and the dye is not a covalent bond. Even though the color stability of the plastic article may be enhanced by a covalent bond between the locker agent and the dye, the recyclability of the plastic article is enhanced, when the bond is not a covalent bond. Furthermore, not having a covalent bond between the dye and the locker agent facilitates the reversible formation of the bond. Preferably the intermolecular bond between the dye and the locker agent is an ionic-, polar-, dative bond, hydrogen bond and/or based on London and/or van-der-Waals interaction between the locker agent and the dye.

The reversible formation of the bond between the locker agent and the dye not only enhances the color stability of the plastic article under use conditions but also enables decoloring of the plastic article under decolor conditions in the recycling process. When decoloring the plastic article, the decolor conditions are selected in such a way that the interactions between the locker and the dye are greatly reduced or completely eliminated. Preferably, a key agent in the decoloring process enables the dye to be removed from the plastic article by reducing the interactions between the dye and the locker agent. In other words, the reversible bond between the dye and the locker agent in the plastic is breakable by the key agent and thus the dye is able to migrate out of the plastic.

For some pairs of dye and locker agent a strength of the reversible bond between the dye and locker agent is dependent on the temperature. Preferably the bond between the dye and the locker becomes weaker as the temperature increases. This enables a simplified decoloring at high temperature and still ensures a good color stability at ambient temperatures.

According to the above, a further object of the present invention is to provide a decoloring method for a plastic article manufactured according to the above manufacturing method, comprising the steps

- exposing the colored plastic article to a polar solvent comprising a key agent,
  wherein the key agent is an acid and present in the polar solvent in a molar amount at least twice as high to the amount of dye in the plastic article,
  or wherein the key agent is a base and present in the polar solvent in a molar amount at least twice as high to the amount of dye in the plastic article,
  or wherein the key agent is a Lewis base and present in the polar solvent in a molar amount at least twice as high as the amount of dye in the plastic article and/or the Lewis base and the metal compound of the locker agent form a complex having a stability constant of the complex Kf ≥ 4,

or wherein the key agent is a Lewis acid and the Lewis acid forms in the polar solvent mono atomic cations, preferably having a charge ≥ 2+, and/or the Lewis acid and the dye form a complex having a solubility in the polar solvent of less than 0,001 g/L.

The above described basic idea can be implemented with different types of dyes, locker agents, and key agents. However, better results i.e. high color stability and eased decoloring of the plastic articles are achieved when the dye, the locker agent, and the key agent are matched to each other.

## Dyes

With regard to the dye, different types of dyes can be used:
According to a preferred embodiment of the invention the dye has an acid dissociation constant pKA ≥ 8 and/or comprises at least one functional group selected from the group comprising primary amines ($RNH_2$), secondary amines (RNHR), tertiary amines ($RNR_2$), imines ($R_2C$=NR), hydrazones ($R_2C$=N-$NH_2$) and acylhydrazines (R-(C=O)NH-$NH_2$). In other words, these are dyes comprising basic or cationic groups. In the following these dyes are called basic dyes.
According to another preferred embodiment the dye has an acid dissociation constant pKA ≤ 6 and/or comprises at least one functional group selected from the group comprising carboxylic acids (RC(=O)OH), phosphoric acids (RP(=O)$_2$OH), and sulfonic acids (RS(=O)$_2$OH), sulfinic acids (RS(=O)OH), sulfenic acids (R(S=O)H), and sulfonamides ($RSO_2NH_2$). In other words, these are dyes comprising acidic or anionic groups. In the following these dyes are called acidic dyes.
According to a further preferred embodiment the dye has an acid dissociation constant pKA in between 6 and 8 and/or is a Lewis base and/or comprises at least one functional group selected from the group comprising hydroxyls (ROH), ethers (ROR), nitriles (RCN), oximes (R=N-OH), esters (RCOOR), carboxamides (R(C=O)$NH_2$), aldehydes (R(C=O)H), ketones (R(C=O)R), alkenes (R2C=CR2), and alkynes (RC=CR). In other words, these are neutral dyes comprising groups that are only weakly acidic or basic. In the following these dyes are called neutral dyes.
It may also be the case that a dye comprises functional groups of different types, i.e. basic functional groups and acidic functional groups. Such dyes are further called ampholytic dyes.
In order to enable decolorization of the colored plastic article for recycling, the dye is a low molecular weight dye, meaning the molecular weight Mw of the dye is in the range of about ≥ 250 g/mol to about ≤ 750 g/mol. Preferably, the dye has a molecular weight Mw in the range of about ≥ 270 g/mol to about ≤ 450 g/mol, and more preferably the dye has a molecular weight Mw in the range of about ≥ 285 g/mol to about ≤ 400 g/mol.
The dye may be a dispersed dye, a solvent dye and/or an acid dye according to the definition above and/or the name or designation according to the Color Index. Such dyes are predominantly molecularly soluble in the plastic basis material or in the carrier used to produce the plastic article and produce a homogenous either colored-opaque or colored-translucent or -transparent coloration of the plastic article. Preferably the dye is selected from the group comprising phthalocyanine, polymethine, anthraquinone, indanthrone, monoazo, diazo, methine, quinophthalone, perinone, naphthalidimide, indigo and thioindigo dyes.
More preferably the dye is selected from the group comprising the following chemical formulas A1 to A14 according to table 1:

| Table 1 | |
|---|---|
| Chemical formula A1 | 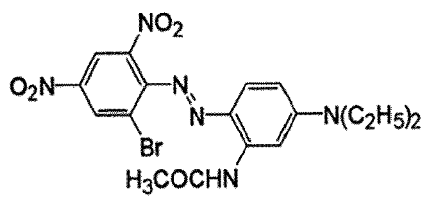 |
| Chemical formula A2 | 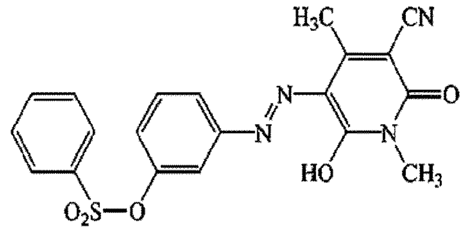 |

(continued)

| Table 1 | |
|---|---|
| Chemical formula A3 | 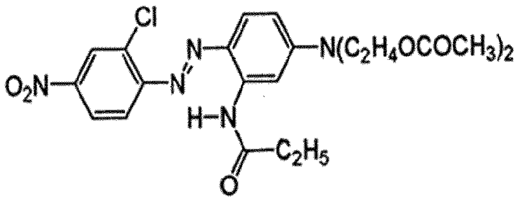 |
| Chemical formula A4 | 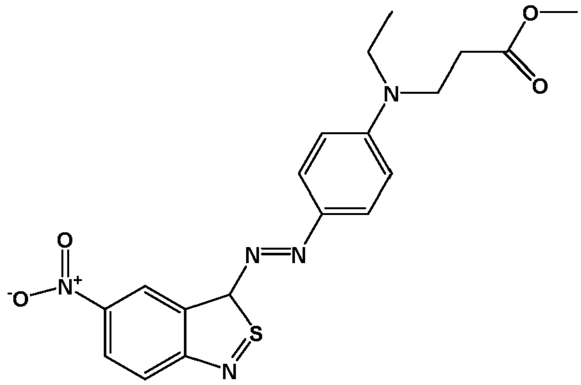 |
| Chemical formula A5 | 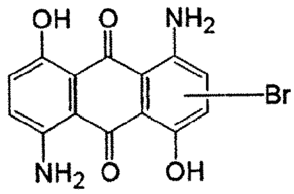 |
| Chemical formula A6 | 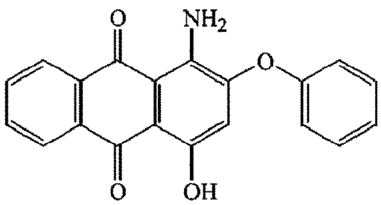 |
| Chemical formula A7 | 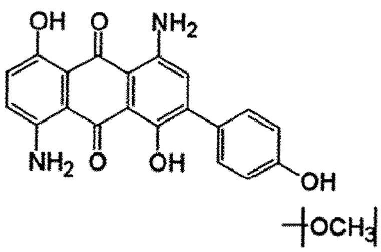 |
| Chemical formula A8 | 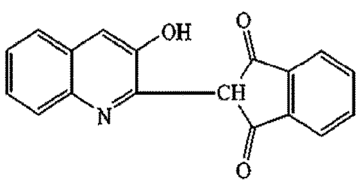 |

(continued)

| Table 1 | |
|---|---|
| Chemical formula A9 | 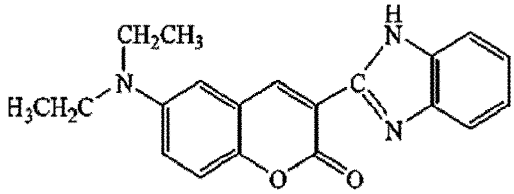 |
| Chemical formula A10 | 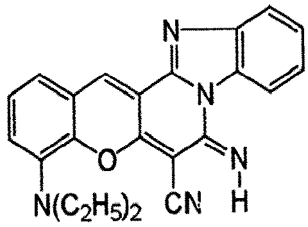 |
| Chemical formula A11 | 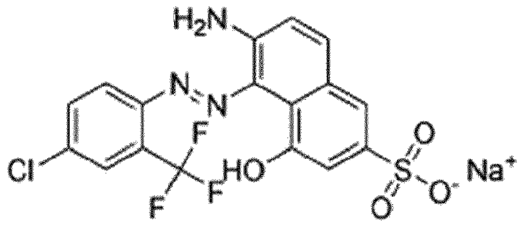 |
| Chemical formula A12 | 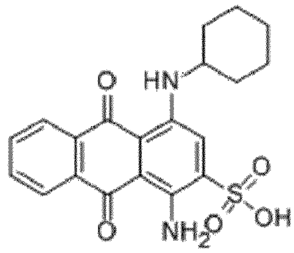 |
| Chemical formula A13 | 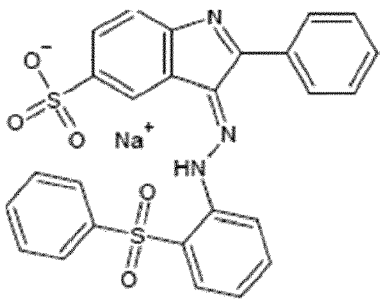 |
| Chemical formula A14 | 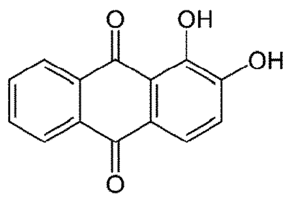 |

Regarding the chemical formula A7, the methoxy group -[OCH3] may be an alternative for the hydroxyl group -[OH] on the aromatic moiety, that is not part of the anthraquinone ring system.

Preferably the dye is selected from the group comprising the coloring agents known under the trademark BEMACRON S/SE/E from CHT Germany GmbH, or from Dystar Pte Ltd.

Preferably the dye is selected from the group comprising BEMACRON Yellow S-6GF, BEMACRON Yellow S-4g, BEMACRON Yellow Brown S-2RFl, BEMACRON Orange S-g, BEMACRON Scarlet S-gFl, BEMACRON Scarlet S-BWFl, BEMACRON Rubine S-2GFL, BEMACRON Violet S-3Rl, BEMACRON Violet S-BlF, BEMACRON Blue S-Bgl, BEMACRON Blue S-BB, BEMACRON Turquoise S-gF, BEMACRON Na-vy S-2gl, BEMACRON Navy S-31, BEMACRON Black S-31, BEMACRON Black S-T, BEMACRON Yellow SE-Rdl, BEMACRON Yellow SE-1F, BEMACRON Orange SE-Rdl, BEMACRON Red SE-4g, BEMACRON Pink SE-REl, BEMACRON Red SE-3B, BEMACRON Red SE-Rdl, BEMACRON Blue SE-1F, BEMACRON Blue SE-Rdl, BEMACRON Navy SE-RlX, BEMACRON Black SE-RlX, BEMACRON Black SE-Rd2R, BEMACRON Yellow E-3gl, BEMACRON Red E-FB1, BEMACRON Blue E-FBl, and BEMACRON Black E-R.

More preferably the dye is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Furthermore the dye may be selected from the group of acid dyes comprising Bemacid Blau E-TL, Bemacid Rot E-TL or Bemacid Gelb E-TL, Bemacid Blue N-TF, Bemacid Red N-TF, Bemacid Yellow N-TF, Bemacid Leuchtgelb E-B, Bemacid Gelb E-4G, Bemacid Gelb E-T3R, Bemacid Gelb E-5R, Bemacid Leuchtrot E-B, Bemacid Rot E-KRL, Bemacid Rot E-T2B, Bemacid Rot E-3BS, Bemacid Blau E-2R, Bamacid Blau E-T4R, Bemacid Blau E-G, Bemacid Blau E-3GC, Bemacid Gelb N-2G, Bemacid Orange N-BG, Bemacid Rubin N-5B, Bemacid Bordeaux N-BL, Bemacid Blau N-5GL, Bemacid Marine N-5R, Bemacid Schwarz N-TMF, or the group of metal complex dyes Bemaplex BEMAPLEX Gelb M-T, BEMAPLEX Rot M-T and BEMAPLEX Marine M-T.

Furthermore, the dye may be selected from the group comprising polymethine dyes. Preferably, the polymethine dyes from the companies BUFA GmbH & Co. KG, BUFA Chemikalien GmbH & Co. KG, BUFA Composite Systems GmbH & Co. KG, and/or BUFA Reinigunssysteme GmbH & Co. KG may be used.

The dye may be a ready-to-use dye, i.e. a dye comprising a dispersing agent or another additive. Alternatively, it may be a dye not comprising a dispersing agent or any additive.

## Locker agents

The locker agent reversibly forms a bond to the dye in order to hinder the migration of the dye and enhances the color stability of the plastic article. As already mentioned, depending on the type of dye, the locker agent is selected accordingly.

In case a basic (cationic) dye is used, acidic (anionic) locker agents are preferred. In case an acidic (anionic) dye is used, basic (cationic) locker agents are preferred. In case a neutral dye is used, metal compounds as locker agents are preferred. For ampholytic dyes comprising basic and acidic groups, either acidic locker agents or basic locker agents can be used. Preferably, the locker agent is selected differently to the dye, the carrier and the plastic basis material.

For basic dyes acidic locker agents are preferred. These acidic locker agents may be selected from the group comprising acidic additives, acidic oligomers, acidic polymers, polyacids, and anionic polyelectrolytes.

According to a preferred embodiment of the invention the acidic additive has a molecular weight about ≥ 45 to g/mol to about < 600 g/mol and is selected from the group comprising carboxylic acids with the general structure RC(=O)OH wherein R is aliphatic and/or aromatic, preferably citric acid, tartaric acid, agaricine acid and oxalic acid, and organophosphates with the general structure $O=P(OH)(OR)_2$ or $O=P(OH)_2(OR)$ wherein R is aliphatic and/or aromatic.

Furthermore, Hexa methylene diamine tetra (MethylenePhosphonic Acid) HMDTMPA may be used as acidic additive.

According to another preferred embodiment of the invention the acidic oligomer, the acidic polymer, the polyacid, and the anionic polyelectrolyte has a molecular weight about ≥ 600 g/mol and is selected from the group comprising fulvic acid, fatty acids, copolymers of acrylic-methacrylic- and ethacrylic acid, Poly(2-acrylamido-2-methyl-1-propanesulfonic acid), substituted styrenes polymers with an acid substituent in the side chain, oligo- and polyesters having carboxylic end groups, functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid; poly(1-naphthylamine)-camphorsulfonic acid, high-molecular sulphonates, carboxylated polyvinyl alcohols.

For acidic dyes basic locker agents are preferred. These basic locker agents may be selected from the group comprising basic additives, basic oligomers, basic polymers, polybases, and cationic polyelectrolytes.

According to a preferred embodiment of the invention the basic additive has a molecular weight about ≥ 45 to

g/mol to about < 600 g/mol and is selected from the group comprising: primary amines ($RNH_2$), secondary amines (RNHR), tertiary amines ($RNR_2$), preferably DABCO, quaternary ammonium compounds, primary amides (RC=ONH2), secondary amides (RC=ONHR), tertiary amides ($RC=ONR_2$), aliphatic amines, preferably tertiary amines with long side chains such as tri-n-butylamine, piperidines, morpholines, aromatic amines, preferably pyridine, ethoxylated oleylamines and ethoxylated oleylamines in combination with aromatic sulfonates.

Preferred basic locker agents for acidic dyes having a sulfonic acid group or a sulfonate groups are fatty acid amine polyglycol ethers.

According to a preferred embodiment of the invention the basic oligomer, the basic polymer, the polybase, and the cationic polyelectrolyte has a molecular weight about ≥ 600 g/mol and is selected from the group comprising polyquaternium, derivates of polyamines, derivates of methylolamides, polyetheramines (PEA) with one or more terminal aminogroups, poly- and oligo-amino acids such as oligo- and poly lysin, poly vinylamine (poly amino ethylene), polyamides with high amide group content such as PA2 or PA3, basic acrylates and their copolymers such as E1205, E1206, E1207, (N,N-Dimethylaminoethylene) methacrylate (DMAEMA) and its copolymers, such as Polydimethylaminoethylene methacrylate (PDMAEMA), (N,N-Diethylaminoethylene) methacrylat (DEAEMA) and its copolymers, N-(3-Aminopropyl methacrylamide); collagen, gelatin, anion exchangers, polyvinylpyrrolidone, chitosan, polyureas, heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinyl pyrimidine polymers, vinyl piperidine polymers, 9-vinylcarbazole polymers, 3-vinylcarbazole polymers, 4-vinylcarbazole polymers, 1-vinylimidazole polymers, 2-methyl-1-vinylimidazole polymers, aminated polyvinyl alcohols.

Furthermore, basic oligomer and/or polymer, the polybase, and the cationic polyelectrolyte may be selected from the group comprising polymers containing vinylamine units, polymers containing vinylguanidine units, polymers containing dialkylaminoalkyl(meth)acrylamide units, polyethyleneimines, ethyleneimine-grafted polyamidoamines and polydiallyldimethylammonium chlorides.

These polymers may be obtainable for example by polymerizing N-vinylformamide, N-vinyl-N-methylformamide, N-vinylacetamide, N-vinyl-N-methylacetamide, N-vinyl-N-ethylacetamide and N-vinylpropionamide. The monomers mentioned can be polymerized either alone or together with other monomers. Useful monoethylenically unsaturated monomers for copolymerization with the N-vinylcarboxamides include all compounds copolymerizable therewith. Examples thereof are vinyl esters of saturated carboxylic acids of 1 to 6 carbon atoms such as vinyl formate, vinyl acetate, vinyl propionate and vinyl butyrate and vinyl ethers such as C1-C6-alkyl vinyl ethers, for example methyl vinyl ether or ethyl vinyl ether. Useful comonomers further include esters, amides and nitriles of ethylenically unsaturated C3-C6 carboxylic acids, such as for example methyl acrylate, methyl methacrylate, ethyl acrylate and ethyl methacrylate, acrylamide and methacrylamide and also acrylonitrile and methacrylonitrile.

Useful carboxylic esters are further derived from glycols or polyalkylene glycols, in either case only one OR group being esterified, for example hydroxyethyl acrylate, hydroxyethyl methacrylate, hydroxypropyl acrylate, hydroxybutyl acrylate, hydroxypropyl methacrylate, hydroxybutyl methacrylate and also acrylic monoesters of polyalkylene glycols

Useful comonomers further include esters of ethylenically unsaturated carboxylic acids with amino alcohols such as for example dimethylaminoethyl acrylate, dimethylaminoethyl methacrylate, diethylaminoethyl acrylate, diethylaminoethyl methacrylate, dimethylaminopropyl acrylate, dimethylaminopropyl methacrylate, diethylaminopropyl acrylate, dimethylaminobutyl acrylate and diethylaminobutyl acrylate.

The basic acrylates can be used in the form of the free bases, in the form of their salts with mineral acids such as hydrochloric acid, sulfuric acid or nitric acid, in the form of their salts with organic acids such as formic acid, acetic acid, propionic acid or sulfonic acids or in quaternized form. Useful quaternizing agents include for example dimethyl sulfate, diethyl sulfate, methyl chloride, ethyl chloride or benzyl chloride.

Furthermore, useful comonomers further include amides of ethylenically unsaturated carboxylic acids such as acrylamide, methacrylamide and also N-alkylmonoamides and -diamides of monoethylenically unsaturated carboxylic acids having alkyl moieties of 1 to 6 carbon atoms, for example N-methylacrylamide, N,N-dimethylacrylamide, N-methylmethacrylamide, N-ethylacrylamide, N-propylacrylamide and tert-butylacrylamide and also basic (meth)acrylamides, for example dimethylaminoethylacrylamide, dimethyl aminoethylmethacrylamide, diethyl-aminoethylacrylamide, diethylaminoethylmethacrylamide, dimethylaminopropylacrylamide, diethylaminopropylacrylamide, dimethylaminopropylmethacrylamide and diethylaminopropyl-methacrylamide.

Useful comonomers further include N-vinylpyrrolidone, N-vinylcaprolactam, acrylonitrile, methacrylonitrile, N-vinylimidazole and also substituted N-vinylimidazoles such as for example N-vinyl-2-methylimidazole, N-vinyl-4-methylimidazole, N-vinyl-5-methylimidazole, N-vinyl-2-ethylimidazole and N-vinylimidazolines such as N-vinylimidazoline, N-vinyl-2-methylimidazoline and N-vinyl-2-ethylimidazoline. N-Vinylimidazoles and N-vinylimidazolines are used not only in the form of the free bases but also after neutralization with mineral acids or organic acids or in quaternized form, in which case the quaternization is preferably effected using dimethyl sulfate, diethyl sulfate, methyl chloride or benzyl chloride. It is further possible to use diallyldialkylammonium halides, for example diallyldimethylammonium chloride.

Further useful basic oligomers, basic polymers, polybases, and cationic polyelectrolytes further include ethyleneimine- grafted polyamidoamines, which are obtainable for example by condensing dicarboxylic acids with polyamines and subsequent grafting with ethyleneimine.

Further useful basic oligomers, basic polymers, polybases, and cationic polyelectrolytes further include polyallylamines. Polymers of this kind are obtained by homopolymerization of allylamine, preferably in acid-neutralized form, or by copolymerizing allylamine with other monoethylenically unsaturated monomers described above as comonomers for N-vinylcarboxamides.

Useful basic oligomers, basic polymers, polybases, and cationic polyelectrolytes further include watersoluble crosslinked polyethyleneimines which are obtainable by reaction of polyethyleneimines with crosslinkers such as epichlorohydrin or bischlorohydrin ethers of polyalkylene glycols having from 2 to 100 ethylene oxide and/or propylene oxide units and which still have free primary and/or secondary amino groups. Also suitable are amidic polyethyleneimines which are obtainable for example by amidation of polyethyleneimines with C1-C22-monocarboxylic acids.

Furthermore, useful basic oligomers, basic polymers, polybases, and cationic polyelectrolytes further include alkylated polyethyleneimines and alkoxylated polyethyleneimines. The polyethyleneimine is alkoxylated using for example from 1 to 5 ethylene oxide or propyleneoxide units per NH unit in the polyethyleneimine.

Preferred basic oligomers, basic polymers, polybases, and cationic polyelectrolytes include polymers containing vinylamine units, polyvinylguanidines and polyethyleneimines.

Furthermore, useful basic oligomers, basic polymers, polybases, and cationic polyelectrolytes may further include oligomer and polymer additives with a primary or secondary amino group or with tertiary nitrogen able to bind water-soluble dyes containing acid groups. Such may include ethylene copolymers with alkyl aminoacrylates, vinylpyridine, N-vinylcarbazole and acrylamide, further acrylate copolymers, copolyamides with the derivatives of piperazine, polyaminotriazoles, polyureas and styrene-amine resins.

Furthermore, the basic oligomers, basic polymers, polybases, and cationic polyelectrolytes may further be selected from the group comprising Polyquerternium 1 - 47, such as PQ6 (Polydiallyldimethylammonium chloride, PDADMAC), cationic flocculants such as Poly(methacryloyloxyethyldimetyl-benzylammoniumchlorid) PMBQ or copolymers of Acyrylamid and N-Acrylooylethyl-N,N,N-trimethylammoniumchlorid (P(AAm-co-ADAM), cationic modified starch especially with high degree of substitution (e.g. from Südstärke AG), polyethylimin PEI (coming from Aziridin, especially highly branched types), alkylaminoethoxylates, such as amino terminated PEG, PPG and their copolymers, aminoethyleted acrylic polymers and copolymers, poly(amidoamine) PAMAM (e.g. from Evonik), cyanamide, dicyanamide, dicyandiamde, wet-strength additives such as PAAE (poly amidoamine - epichlor hydrine - resin).

For neutral dyes metal compounds as locker agents are preferred. According to a preferred embodiment of the invention the metal compound is selected from the group comprising compounds, complexes or especially salts of metals of the second and third main group of the periodic system of elements, in particular aluminum (Al), calcium (Ca), boron (B), and transition metals of the 3d and 4d series, in particular cobalt (Co) and iron (Fe), copper (Cu), nickel (Ni), Chromium (Cr), preferably aluminum hydroxide ($Al(OH_3)$), aluminum chloride ($AlCl_3$), calcium carbonate ($CaCO_3$), copper sulfate ($CuSO_4$), and iron sulfate ($Fe_2(SO_4)_3$).

## Plastic basis material and carrier

As already mentioned, the dye is predominantly molecularly solved in the plastic basis material or in the carrier, which means that at least 80 % of the dye are molecularly solved in the plastic basis material or in the carrier. In other words, the plastic basis material or the carrier act as solvent for the dye. This has the advantage that the plastic article produced has a high color homogeneity and highly transparent parts are possible.

In general, the plastic basis material used for producing the plastic article may be any plastic or any mixture of plastics and may be selected according to the use of the plastic article. However, the dyes used for producing the colored plastic articles may be easily soluble in polar polymers such as co-polyester, co-polycarbonates, acrylonitrile-butadiene-styrene, polyamide, polyurethane, and/or polyalkyl(meth)acrylate. The solubility of the dye in non-polar polymers such as polyalkylenes, polyethylene (PE), polypropylene (PP), polybutylene (PB), polystyrene may not be high enough to give satisfying results in term of color homogeneity and/or color strength in the plastic article produced.

To this regard the plastic basis material is based on a polar polymer or on a blend comprising at least 0.5 wt.-% of a polar polymer wherein the polar polymer has a molecular weight $Mw \geq 1000$ g/mol, preferably $Mw \geq 1200$ g/mol, more preferably $Mw \geq 1500$ g/mol and has at least 5 wt.-% of heteroatoms based on the molecular weight of the polar polymer, wherein heteroatoms are any atoms except C and H atoms, or
the plastic basis material is based on a non-polar polymer and the carrier or on a blend comprising at least 99.5 wt.-% of a non-polar polymer and the carrier wherein the non-polar polymer has a molecular weight $Mw \geq 1000$ g/mol, preferably $Mw \geq 1200$ g/mol, more preferably $Mw \geq 1500$ g/mol and has less than 5 wt.-% of heteroatoms based on the molecular weight of the non-polar polymer, wherein heteroatoms are any atoms except C and H atoms. Preferably the heteroatom is selected from the group comprising O, N, S, P, F, Cl, Br, and I. Preferably, the plastic basis material is selected

differently to the carrier.

In other words, in case the plastic basis material is based on a non-polar polymer or on a blend comprising at least 99.5 wt.-% of a non-polar polymer, the carrier is used to achieve good color homogeneity.

The carrier is a polar compound, or a blend comprising at least 10 wt.-% of a polar-compound or mixtures thereof, wherein the polar-compound has a molecular weight Mw < 1000 g/mol, preferably Mw < 900 g/mol, more preferably Mw < 800 g/mol and has at least 5 wt.-% of heteroatoms based on the molecular weight of the polar compound, wherein heteroatoms are any atoms except C and H atoms. Preferably the heteroatom is selected from the group comprising O, N, S, P, F, Cl, Br, and I. Preferably, the carrier is selected differently to the plastic basis material.

<u>Polar-polymer or mixture</u>

The polar polymer or mixture thereof may be selected from the group comprising:

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),
- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl(meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and propylene with acrylic esters, preferably polyethylen-block-co-polymethylmethacrylat, polypropylen-block-co-polymethylmethacrylat;
- aliphatic and/or aromatic polyesters, preferably, hydroxyl-functional dendritic polyesters, polycaprolactone, polyethylenterephthalate (PET), polyethylene naphthalate (PEN), polyethylene furanoate (PEF), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspiroglycol-terephthalate (PSG), polycyclohexylenedimethylene-terephthalate (PCT), Polyethylenfuranoate (PEF), Polyethylennaphthylat,

polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;

- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 1,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;
- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate- terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such $NH_2$-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate) /poly(ethylene glycol) semi-IPN, and/or poly(N-isopropylacrylamide-co-acrylic acid) and poly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other polar polymers of amorphous co-polyester, which can be used are known under the tradename Akestra 90, 100 and 110. The above named synthetic polar-polymers may be used alone or in a mixture of two or more.

With regard to hydroxyl-functional dendritic polyesters that can be suitable used as a polar polymer, these molecules may be produced using polyalcohol cores, hydroxy acids and technology based on captive materials. The dendritic structures may be formed by polymerization of the particular core and 2,2-dimethylol propionic acid (Bis-MPA). The hydroxyl-functional dendritic polyesters may be known under the trade name Boltorn®. The following dendritic polymers may be used as non-limiting examples: Boltorn® H20 16 terminal hydroxyl groups, nominal molecular weight of 1750 g/mol, Boltorn® H2004 6 terminal hydroxyl groups, nominal molecular weight of 3100 g/mol, Boltorn® H311 23 terminal hydroxyl groups, nominal molecular weight of 5300 g/mol, Boltorn® P500 Formulated bimodal product with terminal hydroxyl groups, nominal molecular weight 1800 g/mol, Boltorn® P1000 formulated bimodal product with terminal hydroxyl groups, nominal molecular weight 1500 g/mol, Boltorn® U3000 modified with unsaturated fatty acid, nominal

molecular weight 6500 g/mol, Boltorn® W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4' -(hydroxymethyl)cyclohexane carboxylate represented by the following chemical formula 1 and a residue derived from 4,4-(oxybis(methylene)bis) cyclohexane methanol represented by the following chemical formula 2.

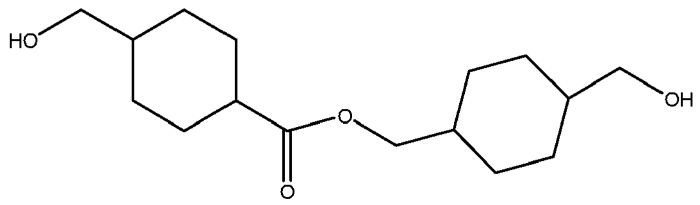

Chemical Formula 1

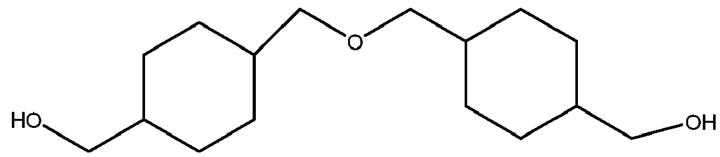

Chemical Formula 2

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar polymer may also comprise the polyester based copolymers used in a mixture with polyethylene terephthalate (PET). The mixture may consist of 1 to 99 wt.-% of PET and 1 to 99 wt.-% of the polyester based copolymers, in order that both components add up to 100 wt.-%. Additionally, or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated

sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

Preferably the polar polymer has a molecular weight Mw ≥ 1000 g/mol, preferably Mw ≥ 1200 g/mol, more preferably Mw ≥ 1500 g/mol.

Polar compound and mixtures thereof

The carrier comprises a polar compound or a mixture of polar compounds. Preferably the polar compound has a molecular weight Mw < 1000 g/mol, more preferably < 900 g/mol, even more preferably < 800 g/mol. The polar compound may be selected from the group comprising aliphatic acids $CH_3$-$[CH_2]_n$-COOH acids (n about ≥ 3), amino acids, carboxylic acid amide, hydroxyl acids, fatty acids, and their esters aliphatic or aliphatic/aromatic aldehydes and ketones, esters, pentaerythritol, pentaerythritol dimers, pentaerythritol trimers, pentaerythritol ester preferably carboxylic acid ester, benzoic acid esters comprising benzyl benzoat or phenyl benzoat, phenylether, alcohols and polyvalent alcohols, preferably glycerine, amines.

The carboxylic acid amide may comprise a compound according to formula $C_2H_4(NHC(O)R^3)_2$, wherein $R^3$ is a fatty acid moiety comprising 10-17 carbon atoms. The fatty acid moieties may be saturated or unsaturated. When the amount of carboxylic acid amide is too high the colored plastic article may show blooming. Blooming i.e. discolorations may be caused by phase separation of the plastic material's components. It may be caused by incompatibilities of the polar compound with the plastic basis material.

Pentaerythritol may comprise a compound according to formula $C(CH_2OR)_4$, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore, the polar compound may be an ether. Ether these may comprise but not limited to compounds that contains at least one ethyleneglycol moiety and at least one fatty acid moiety coupled to the ethyleneglycol moiety.

Examples of compound that contains at least one ethyleneglycol moiety and at least one fatty acid moiety coupled to the polyethyleneglycol moiety include PEG 300-monostearate, PEG 400 monolaurate.

The carboxylic acid ester may comprise a compound according to the following chemical formula 3:

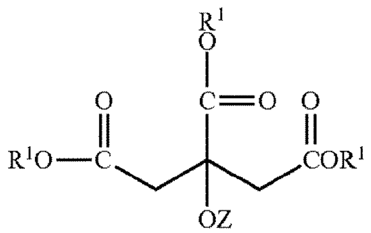

Chemical Formula 3

wherein $R^1$ is an alkyl group comprising 1-20 carbon atoms and Z is hydrogen or a group according to the formula $C(O)R^2$, wherein $R^2$ is an alkyl group comprising 1-20 carbon atoms. $R^1$ may be the same or different and is an alkyl group comprising 1-20 carbon atoms, preferably 1-15 carbon atoms, more preferably 1-10 carbon atoms. $R^2$ is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; $R^1$ = $C_4H_9$, Z = $CH_3CO$), propanoyltributylcitrate, acetyltrihexylcitrate and butanoyltriethylcitrate.

Furthermore, as polar compound 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

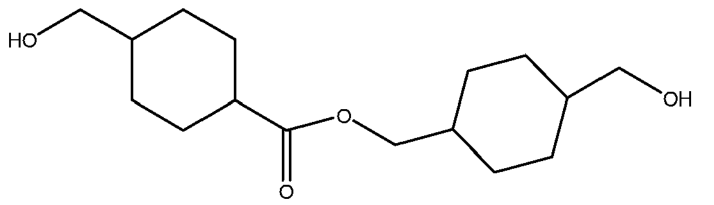

Chemical Formula 1

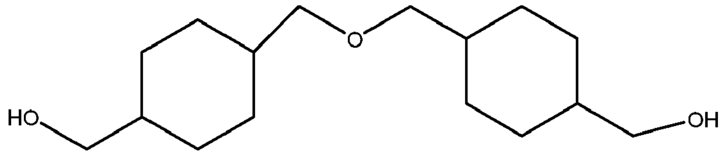

Chemical Formula 2

Non-polar polymer

As already mentioned above, the plastic basis material may comprise a non-polar-polymer or mixtures of non-polar polymers. In connection to this non-polar-polymer the non-polar-polymer may be selected from the group of polyalkylene polymers, polyalkylene copolymers, polyakylene block copolymers. The non-polar-polymer may be preferably selected from of polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene. Preferably the non-polar-polymer may have a wt.-% of heteroatoms below 5 wt.-% with respect to the mass of the non-polar-polymer. Preferably the non-polar polymer has a molecular weight Mw ≥ 1000 g/mol, preferably Mw ≥ 1200 g/mol, more preferably Mw ≥ 1500 g/mol.

Plastic forming processing methods

With regard to the processing methods used for producing the colored plastic article, a variety of different processing methods may be used. According to a preferred embodiment of the invention the plastic forming processing method is selected from:

- thermoplastic processing method or thermoset processing method;
- film extrusion processing method, blown cast processing method, calandered films processing method, thermoforming sheets processing method, foam extrusion processing method, profile extrusion processing method, injection molding processing method, injection blow molding processing method, injection stretch blow molding processing method, compression molding processing method, extruding processing method, thermoforming processing method, blowing processing method and/or 3D-printing processing method.

Not only the different processing methods can be used in order to process the plastic basis material, the color masterbatch, the locker masterbatch and/or the color-locker masterbatch, but also different colored plastic articles may be produced. According to preferred embodiment of the invention, the colored plastic article is selected from the group comprising a sheet, a foil, a container, a part, a tube, a profile, a non-woven fabric, and preferably the article is selected from the group comprising rigid packaging such as bottles or jars, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

In order to enhance ease of processability and according to a preferred embodiment the plastic basis material, the color-locker masterbatch, the color masterbatch and/or the locker masterbatch is solid under standard conditions. Standard conditions are those of the International Union of Pure and Applied Chemistry (IUPAC) and are defined as a temperature of 273.15 K (0 °C) and an absolute pressure of 105 Pa (100 kPa, 1 bar).

**Color stability of the plastic article**

As already mentioned, the colored plastic article is not only easily recyclable but also color stable, meaning the migration of the dye in the plastic is strongly reduced. According to a preferred embodiment of the invention the colored plastic article is color stable under any or any combinations of the following conditions:

- boiling in water for 24h;
- exposure to a 2% alkaline solution of NaOH for 8 h at 80 °C;
- exposure to a 3% acid solution of acetic acid for 8 h at 80 °C;
- fastness to washing acc. to DIN EN ISO 105-C06 C2S;
- fastness to perspiration acc. to DIN EN ISO 105-E04;
- exposure to a solution of 20% ethanol and 3% acetic acid in water for 10 days at 60 °C.

To this regard and according to another preferred embodiment the colored plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

## Decoloring conditions

As already mentioned, the colored plastic article is decolorizabel under the decolor conditions. Being decolorizable preferably means that the plastic article can be decolored without the need to destroy the plastic article. However, the duration for which the plastic article needs to be exposed to the decolor condition may be decreased when the plastic article is present in the form of small granulates or flakes.

According to the above, a further object of the present invention is to provide a decoloring method for a plastic article manufactured according to the above manufacturing method, comprising the steps

- exposing the colored plastic article to a polar solvent comprising a key agent,
  wherein the key agent is an acid and present in the polar solvent in a molar amount at least twice as high to the amount of dye in the plastic article,
  or wherein the key agent is a base and present in the polar solvent in a molar amount at least twice as high to the amount of dye in the plastic article,
  or wherein the key agent is a Lewis base and present in the polar solvent in a molar amount at least twice as high as the amount of dye in the plastic article and/or the Lewis base and the metal compound of the locker agent form a complex having a stability constant of the complex Kf ≥ 4,
  or wherein the key agent is a Lewis acid and the Lewis acid forms in the polar solvent mono atomic cations, preferably having a charge ≥ 2+, and/or the Lewis acid and the dye form a complex having a solubility in the polar solvent of less than 0,001 g/L.

Preferable depending on the type of dye and the locker agent, the decolor conditions and the key agent, are selected accordingly. Preferably the key agent is selected different to the locker agent, and the dye.

For basic dyes and colored plastic article comprising an acidic locker agent and according to a preferred embodiment of the invention the plastic article is decolorizable under the following decolor conditions:

- exposing the colored plastic article to the polar solvent at a temperature of about ≥ 30 °C to about ≤ 200 °C, wherein the polar solvent has a pH ≥ 7 and comprises the key agent in form of a base with a $pK_A \geq 9$ and/or a $pK_A$ at least 1 $pK_A$ unit higher than the acid dissociation constant $pK_A$ of the dye, and optionally a dispersing agent and/or optionally a sequestering agent, or wherein the polar solvent has a pH ≤ 7 and comprises the key agent in form of an acid with a $pK_A \leq 5.2$ and optionally a dispersing agent and/or optionally a sequestering agent.

For acidic dyes and colored plastic article comprising a basic locker agent and according to a preferred embodiment of the invention, the plastic article is decolorizable under the following decolor conditions:

- exposing the colored plastic article to a polar solvent at a temperature of about ≥ 30 °C to about ≤ 200 °C,
  wherein the polar solvent has a pH ≤ 7 and comprises the key agent in form of an acid with a $pK_A \leq 5.2$ and/or a $pK_A$ at least 1 $pK_A$ unit lower than the acid dissociation constant $pK_A$ of the dye, and optionally a dispersing agent and/or optionally a sequestering agent, or
  wherein the polar solvent has a pH ≥ 7 and comprises the key agent in form of a base with a $pK_A \geq 9$ and optionally a dispersing agent and/or optionally a sequestering agent.

For neutral dyes and colored plastic article comprising a metal compound locker agent and according to a preferred embodiment of the invention the colored plastic article is decolorizable under the following decolor conditions:

- exposing the colored plastic article to a polar solvent at a temperature of about ≥ 30 °C to about ≤ 200 °C, wherein the polar solvent comprises the key agent in form of a Lewis base, and optionally a dispersing agent, or wherein the polar solvent comprises the key agent in form of a Lewis acid, and optionally a dispersing agent.

According to a preferred embodiment the colored plastic article is decolorizable by exposing the colored plastic article to the polar solvent comprising the key agent in a large excess calculated based on the amount of dye in the plastic article. Large excess means that the molar amount of key agent in the polar solvent is at least twice as high as the molar amount of dye in the plastic, preferably at least 5 times as high, more preferably at least 10 times as high. Better results in the decolorization of the plastic article are achieved when the key agent is present in the polar solvent in excess compared to the amount of dye in the plastic article. The higher the ratio mol [key agent] : mol [dye], the more complete and faster the decolorization process is. Preferably, the concentration of the key agent in the polar solvent is higher than 0,0004 mol/L Furthermore, preferably the polar solvent is water.

## Key agents

The key agent enables the dye to be removed from the plastic article by reducing the interactions between the dye and the locker agent. As already mentioned, depending on the type of dye and locker agent the decoloring conditions used are selected accordingly. Preferably the key agent is colorless and selected depending on the above.

Plastic articles comprising basic dyes or acidic dyes can be decolorized in acidic or in basic conditions. As key agents either acids or bases can be used. Depending on the acid dissociation constant $pK_A$ of the dye the key agent is selected accordingly. In order to enhance the decolorization of the plastic article low molecular weight acids and bases are preferred.

According to the above and according to a preferred embodiment of the invention the base with a $pK_A \geq 9$ and/or a $pK_A$ at least 1 $pK_A$ unit higher than the acid dissociation constant $pK_A$ of the dye has a molecular weight Mw < 450 g/mol.

Preferably the base is selected from the group comprising alkaline or alkaline earth hydroxides or -carbonates, in particular LiOH, NaOH, KOH, $Mg(OH)_2$, $Ca(OH)_2$, $Li_2CO_3$, $Na_2CO_3$, $MgCO_3$, $CaCO_3$, also preferably $Al(OH)_3$, $Zn(OH)_2$, $ZnCO_3$, $NH_3$ up to $NR_3$ with R aliphatic or aromatic, Pyridines and Piperidines .

According to the above and according to another preferred embodiment of the invention the acid with a $pK_A \leq 5{,}2$ and/or a $pK_A$ at least 1 $pK_A$ unit lower than the acid dissociation constant $pK_A$ of the dye has a molecular weight Mw < 450 g/mol.

Preferably the acid is selected from the group comprising HCOOH, $CH_3COOH$, $H_3PO_4$, $H_2PO_3$, $H_2SO_4$, $H_2SO_3$, $HNO_3$, HF, HCl, HBr, HI, $HClO_4$, higher aliphatic carboxylic acids such as propionic acid, and butyric acid; fatty acids such as oleic acid and stearic acid; dicarboxylic acids such as oxalic acid, succinic acid, tartaric acid, fumaric acid, maleic acid; tricarboxylic acids such as citric acid, agaric acid; and further organic acids such as benzoic acid and salicylic acid. Oxidizing acids and their salts, such as sodium chlorite, not only act as key agent, but also destroy the dye during or after extraction.

Plastic articles comprising neutral dyes can be decolorized by using a Lewis base or a Lewis acid as key agent. When using a Lewis base as key agent, preferably a strong Lewis base which easily forms a complex with the locker agent is used. Even more preferred are polydentate Lewis bases, which form more than one bond with the locker agent. According to a preferred embodiment of the invention the Lewis base is present in the polar solvent in a concentration higher 0,0004 mol/L and/or the Lewis base and the metal compound form a complex having a stability constant of the complex $Kf \geq 4$.

The complex stability constant Kf is also called complex formation constant and is the equilibrium constant for the formation of the complex in the polar solution under standard conditions. It is a measure of the strength of the interaction between the reagents, i.e. the Lewis base and the metal compound, that come together to form the complex.

Preferably the Lewis base is selected from the group comprising halide salts, acetate salts, glucono delta-lactone, gluconate salts, glutamate salts, histidine, phosphate salts, tripolyphosphate salts, hexametaphosphate salts, hexa-methylene-diamine-tetra-(methylenephosphonate) salts, acetylacetone (acac), β-alanine diacetic acid (ADA), aminoethylethanolamine (AEEA), 2,2'-bipyridine (bpy), citrate, diethylene triamine (dien), dimethylglyoxime (dmg), dimercaptosuccinic acid (DMSA), 1,4,7,10-Tetraazacyclododecane-1,4,7,10-tetraacetic acid (DOTA), 1,2-bis (diphenylphosphino) ethane (dppe), diethylenetriaminepentaacetic acid (DTPA), ethylenediamine disuccinic acid (EDDS), ethylenediaminetetraacetate (EDTA), ethylenediamine (en), tetrasodium N, N-bis (carboxylatomethyl) -L-glutamate (GLDA), iminodiacetate (ida), tetrasodium iminodisuccinate (IDS), Trisodium dicarboxymethyl alaninate (MGDA), nitrilotriacetate (nta), nitrilotrimethylene phosphonate (NTMP), oxalate, 8-hydroxyquinoline, 1,10-phenanthroline, Bis (salicylidene) ethylenediamine (salen), tartrate, ethylenediaminotriacetate (ted), triaminotriethylamine (tren), triethylenetetramine (TETA), triethylenetetramine hexaacetate (TTHA).

When using a Lewis acid as key agent, Lewis acids which form insoluble complexes with the dye are preferred.

According to a preferred embodiment of the invention the Lewis acid forms in the polar solvent monatomic cations, preferably having a charge ≥ 2+, and/or the dye and the Lewis acid form a complex having a solubility in the polar solvent at 23 °C of less than 0,1 g/l, preferably about ≤ 0.01 g/l and more preferably about ≤ 0.001 g/l and > 0 g/l. Most preferably the solubility of the dye-Lewis acid complex is such that the dye-Lewis acid complex precipitates from the polar solvent.

Preferably the Lewis acid is selected from the group comprising salts with the cation $Al^{3+}$, $Fe^{3+}$, $Cr^{3+}$, $Ca^{2+}$, $Mg^{2+}$, $Ni^{2+}$, $Co^{2+}$ and $Cu^{2+}$, such as aluminum hydroxide ($Al(OH_3)$). Preferably alkali metal, preferably sodium and potassium, and alkaline earth metal, preferably magnesium and calcium compounds of the following Lewis acids are used $[Al(SO_4)_2]^-$, $[Fe(SO_4)_2]^-$, $Fe(S_2O_3)_2$, $[FeF_6]^{3-}$, $[Fe(SCN)_6]^{3-}$, $FeCl_4$, $[Ca(C_2O_4)_2]^{2-}$, $[Cu(CH_3COO)_4]^{2-}$, and $[CuCl_4]^{2-}$.

To further accelerate the removal of the dye from the plastic article, the dye in the polar solvent may be chemically altered by oxidizing or reducing agents present in the polar solvent. Typical reducing and oxidizing agents are for example formamide sulfonic acid, sodium thiosulfate, hydrosulfite, zinc hydroxymethasulfinate, Na chlorite or peroxides.

## Dispersing agent and sequestering agent

The decolorization can be enhanced by adding the dispersing agent and/or the sequestering agent to the polar solvent. The dispersing agent and the sequestering agent are optional. Preferably the sequestering agent and the dispersing agent is dye affine such as ethoxylated oleylamines. The dye is predominantly molecularly soluble in the plastic. However, the dye may not be molecularly soluble in the polar solvent. The dispersing agent and/or sequestering agent may enhance the solubility of the dye in the polar solvent. Preferably the dispersing agent is selected differently to the key agent, and the sequestering agent.

According to a preferred embodiment the dispersing agent is selected from the group comprising:

- anionic tenside, preferably selected from polyphosphates, polyacrylates, aromatic sulfonates, esters with ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acid-polymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer have a MW of 5000 to 30000 g/mol,
- a $C_1$ to $C_6$ alcohol, $C_2$ to $C_{20}$ organic acid, $C_3$ to $C_6$ ketone, $C_3$ to $C_5$ aldehyde, $C_1$ to $C_6$ alkyl, $C_3$ to $C_6$ ester, alkylene glycol alkyl ether, glycol alkyl ether; preferably glycol and glycol oligomers, ethanol, acetone, formic acid or acetic acid, dimethylformamide or dimethylsulfoxide,
- strongly dye-affine glazing agents such as fatty acid amine polyglycol ethers and levelling agents such as CHT Sarabid IPD.

The addition of organic solvents to the polar solvent in a proportion of 1 - 99%, which swell the surface of the plastic article and/or increase the solubility of the dye in the polar solvent such as alcohols, esters, ethers, aldehydes, ketones such as methanol, ethanol, isopropanol, ethyl acetate or other solvents such as DMF or DMSO can also be used as dispersing agent.

Furthermore, the polar compounds used as carrier may be used as dispersing agent as well in order to enhance the solubility of the dye in the polar solvent.

According to a preferred embodiment the sequestering agent is selected from the group comprising Lewis acids and Lewis bases.

With regard to the Lewis acid as sequestering agent, preferably salts with the cation $Al^{3+}$, $Fe^{3+}$, $Cr^{3+}$,$Ca^{2+}$, $Mg^{2+}$, $Co^{2+}$, $Ni^{2+}$, and $Cu^{2+}$ are used. Preferably alkali metal, preferably sodium and potassium, and alkaline earth metal, preferably magnesium and calcium compounds of the following Lewis acids are used as sequestering agents $[Al(SO_4)_2]^-$, $[Fe(SO_4)_2]^-$, $Fe(S_2O_3)_2$, $[FeF_6]^{3-}$, $[Fe(SCN)_6]^{3-}$, $FeCl_4$, $[Ca(C_2O_4)_2]^{2-}$, $[Cu(CH_3COO)_4]^{2-}$, and $[CuCl_4]^{2-}$.

With regard to the Lewis base as sequestering agent, the sequestering agent is preferably selected from the group comprising halide salts, acetate salts, glucono delta-lactone, gluconate salts, glutamate salts, histidine, phosphate salts, tripolyphosphate salts, hexametaphosphate salts, hexa-methylene-diamine-tetra-(methylene-phosphonate) salts, acetylacetone (acac), β-alanine diacetic acid (ADA), aminoethylethanolamine (AEEA), 2,2'-bipyridine (bpy), citrate, diethylene triamine (dien), dimethylglyoxime (dmg), dimercaptosuccinic acid (DMSA), 1,4,7,10-Tetraazacyclododecane-1,4,7,10-tetraacetic acid (DOTA), 1,2-bis (diphenylphosphino) ethane (dppe), diethylenetriaminepentaacetic acid (DTPA), ethylenediamine disuccinic acid (EDDS), ethylenediaminetetraacetate (EDTA), ethylenediamine (en), tetrasodium

N, N-bis (carboxylatomethyl) -L-glutamate (GLDA), iminodiacetate (ida), tetrasodium iminodisuccinate (IDS), Trisodium dicarboxymethyl alaninate (MGDA), nitrilotriacetate (nta), nitrilotrimethylene phosphonate (NTMP), oxalate, 8-hydroxyquinoline, 1,10-phenanthroline, Bis (salicylidene) ethylenediamine (salen), tartrate, ethylenediaminotriacetate (ted), triaminotriethylamine (tren), triethylenetetramine (TETA), triethylenetetramine hexaacetate (TTHA)

DETAILED DESCRIPTION OF THE EXAMPLES

The invention will be described in the following with reference to exemplary examples 1 to 7 and the comparative examples 1 to 3. In the examples 1 to 3 a basic dye is used, in the examples 4 to 6 an acidic dye is used and in example 7 a neutral dye is used. In the comparative examples C.1 to C.3 no locker agent is used. The comparative examples C.1 to C.3 correspond in their composition to the exemplary examples 1, 4, and 7.

**Example 1**

A colored plastic article in the form of a plate W x H x T = 30 x 50 x 2 $mm^3$ is produced in an extruder by an injection molding process by:
mixing a plastic basis material with a color-locker masterbatch, in a weight ratio of 96:4 (plastic basis material: color-locker masterbatch)

- wherein the plastic basis material comprises a mixture of PE (Lyondell Basell Hostalen ACP 5831 D), PA6 (DSM Akulon F130-C1) und PE-g-MSA (Bond 110) in a weight ratio of 80:15:5,
- wherein the color-locker masterbatch comprises a mixture of the plastic basis material, a carrier, a dye and a locker agent in a weight ratio of 1:1:1:1, wherein
  the carrier is acetyltributylcitrate (ATBC), the dye is Disperse Blue 56, and the locker agent is citric acid.

**Example 2**

A colored plastic article in the form of a plate W x H x T = 30 x 50 x 2 $mm^3$ is produced in an extruder by an injection molding process by:
mixing a plastic basis material with a color-locker masterbatch, in a weight ratio of 95:5 (plastic basis material: color-locker masterbatch)

- wherein the plastic basis material comprises a mixture of PE (Lyondell Basell Hostalen ACP 5831 D), PA6 (DSM Akulon F130-C1) und PE-g-MSA (Bond 110) in a weight ratio of 80:15:5,
- wherein the color-locker masterbatch comprises a mixture of the plastic basis material, a dye and a locker agent in a weight ratio of 1:1:3, wherein
  the dye is Bemacron Blue E-FBL, and the locker agent is citric acid.

**Example 3**

A colored plastic article in the form of a plate W x H x T = 30 x 50 x 2 $mm^3$ is produced in an extruder by an injection molding process by:
mixing a plastic basis material with a color-locker masterbatch, in a weight ratio of 91:9 (plastic basis material: color-locker masterbatch)

- wherein the plastic basis material comprises a mixture of PE (Lyondell Basell Hostalen ACP 5831 D), PA6 (DSM Akulon F130-C1) und PE-g-MSA (Bond 110) in a weight ratio of 80:15:5,
- wherein the color-locker masterbatch comprises a mixture of the plastic basis material, a carrier, a dye and a locker agent in a weight ratio of 1:1:1:6, wherein
  the carrier is acetyltributylcitrate (ATBC), the dye is Disperse Blue 56, and the locker agent is PE-Methacrylic acid Copolymer (NUCREL 1202 HC).

**Example 4**

A colored plastic article in the form of a plate W x H x T = 30 x 50 x 2 $mm^3$ is produced in an extruder by an injection molding process by:
mixing a plastic basis material with a color-locker masterbatch, in a weight ratio of 83,3:16,7 (plastic basis material: color-locker masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 53,9:14,7:14,7,
- wherein the color-locker masterbatch comprises a mixture of a carrier, a dye and a locker agent in a weight ratio of 1:1:14,7, wherein
  the carrier is acetyltributylcitrate (ATBC), the dye is Acid Yellow 246, and the locker agent is polyetheramine PEA (Huntsman Jeffamin ED-2003).

**Example 5**

A colored plastic article in the form of a plate W x H x T = 30 x 50 x 2 $mm^3$ is produced in an extruder by an injection molding process by:
mixing a plastic basis material with a color-locker masterbatch, in a weight ratio of 83,3:16,7 (plastic basis material: color-locker masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 64,8:17,6:17,6,
- wherein the color-locker masterbatch comprises a mixture of the plastic basis material, a dye and a locker agent in a weight ratio of 1:1:14,7, wherein
  the dye is Bemacid Yellow E-TL, and the locker agent is polyetheramine PEA (Huntsman Jeffamin ED-2003).

**Example 6**

A colored plastic article in the form of a plate W x H x T = 30 x 50 x 2 $mm^3$ is produced in an extruder by an injection molding process by:
mixing a plastic basis material with a color-locker masterbatch, in a weight ratio of 93: 7 (plastic basis material: color-locker masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 68,6:15,7:15,7,
- wherein the color-locker masterbatch comprises a mixture of the plastic basis material, a dye and a locker agent in a weight ratio of 1:1:5, wherein
  the dye is Acid Yellow 246, and the locker agent is Polydimethylaminoethylene methacrylate (PDMAEMA).

**Example 7**

A colored plastic article in the form of a plate W x H x T = 30 x 50 x 2 $mm^3$ is produced in an extruder by an injection molding process by:
mixing a plastic basis material with a color-locker masterbatch, in a weight ratio of 83,2:16,7 (plastic basis material: color-locker masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 64,8:17,6:17,6,
- wherein the color-locker masterbatch comprises a mixture of a plastic basis material, a carrier, a dye, and a locker in a weight ratio of 8,82:1:1:5,88, wherein
  the plastic basis material is PP, the carrier is acetyltributylcitrate (ATBC), the dye is Alizarin, and the locker agent is $MgCO_3$.

**Comparative Example C.1**

This comparative example corresponds to the exemplary example 1, except that no locker agent is used. A colored plastic article in the form of a plate W x H x T = 30 x 50 x 2 $mm^3$ is produced in an extruder by an injection molding process by:
mixing a plastic basis material with a color masterbatch, in a weight ratio of 97:3 (plastic basis material: color masterbatch)

- wherein the plastic basis material comprises a mixture of PE (Lyondell Basell Hostalen ACP 5831 D), PA6 (DSM Akulon F130-C1) und PE-g-MSA (Bond 110) in a weight ratio of 80:15:5,
- wherein the color masterbatch comprises a mixture of the plastic basis material, a carrier, and a dye in a weight ratio of 1:1:1, wherein

the carrier is acetyltributylcitrate (ATBC) and the dye is Disperse Blue 56.

**Comparative Example C.2**

This comparative example corresponds to the exemplary example 4, except that no locker agent is used. A colored plastic article in the form of a plate W x H x T = 30 x 50 x 2 $mm^3$ is produced in an extruder by an injection molding process by:
mixing a plastic basis material with a color masterbatch, in a weight ratio of 98:2 (plastic basis material: color masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 53,9:14,7:14,7,
- wherein the color masterbatch comprises a mixture of a carrier and a dye in a weight ratio of 1:1, wherein
  the carrier is acetyltributylcitrate (ATBC) and the dye is Acid Yellow 246.

**Comparative Example C.3**

This comparative example corresponds to the exemplary example 7, except that no locker agent is used. A colored plastic article in the form of a plate W x H x T = 30 x 50 x 2 $mm^3$ is produced in an extruder by an injection molding process by:
mixing a plastic basis material with a color masterbatch, in a weight ratio of 97:3 (plastic basis material: color masterbatch)

- wherein the plastic basis material comprises a mixture of PP (Ineos 401-CB50), PA (Arkema Platamid HX2544TA), and PP-g-MSA (Dupont Fusabond P MD353D) in a weight ratio of 64,8:17,6:17,6,
- wherein the color masterbatch comprises a mixture of a plastic basis material, a carrier, and a dye, in a weight ratio of 1:1:1, wherein
  the plastic basis material is PP, the carrier is acetyltributylcitrate (ATBC), and the dye is Alizarin.

**Color stability**

The color stability of the plastic articles produced according to the above exemplary examples 1 to 7 and comparative examples C.1 to C.3 was evaluated by different dye migration tests. The following table 2 summarizes the migration tests that have been carried out:

Table 2: Migration Tests

| | | Medium/regulation | Temperature | Duration |
|---|---|---|---|---|
| Contact Migration Test | MT 1.1 | PVC | 50°C | 5 h |
| | MT 1.2 | According to DIN EN ISO 105-E04 | | |
| Extraction Migration Tests | MT 2.1 | Ethanol 95% | Boiling temp | 1 h |
| | MT 2.2 | Acetic Acid 3% | 80 °C | 8 h |
| | MT 2.3 | NaOH 2% | 80 °C | 8 h |
| | MT 2.4 | Ethanol 20% and Acetic acid 3% | 60 °C | 10 d |
| | MT 2.5 | According to DIN EN ISO 105-C06 C2S | | |

Contact Migration Test MT 1.1 and MT 1.2

The contact migration test MT 1.1 is performed by means of a perspirometer. The individual test specimens are covered on both sides with monomer-softened white PVC and clamped into the perspirometer separated by acrylic plates. The perspirometer remains in a heating cabinet at 50 °C for 5 hours. After taking out the samples, the evaluation is carried out by visual assessment of the change in color of the soft PVC. The contact migration test MT 1.2 was carried out according to DIN EN ISO 105-E04.

Extraction Migration Test MT 2.1 to 2.5

For the Extraction Migration Tests MT 2.1 to 2.4 the plastic article was extracted in a round bottom flask with reflux condenser under stirring in the specified medium and for the specified time. The plastic article was then removed from the extraction medium and rinsed under warm water. The extraction medium and the plastic article are evaluated visually and/or by measuring the color intensity in comparison before and after. The Extraction Migration Test MT 2.5 was carried out according to DIN EN ISO 105-C06 C2S.

The color stability of the plastics articles within the migration tests was assessed by visually comparing the color of the extraction medium before and after the migration test and/or the percentage loss of color strength K/S according to Kubelca-Munk of the plastic article before and after the migration test. Color strength according to Kubelca-Munk was measured and calculated by the spectrophotometer Konica-Minolta 3600A at max. adsorbance. The remaining color strength is calculated as follows:

$$reamining\ color\ strength = 1 - \frac{(color\ strength\ before - color\ strength\ after)}{color\ strength\ before}\ in\ \%$$

The assessment of the migration tests was rated by points according to the following Table 3:

Table 3

| Points | Visual inspection of medium | Remaining color strength of plastic article |
|---|---|---|
| 1 | Medium unchanged clear, transparent | Plastic article not decolored, remaining color intensity ≥ 90% |
| 2 | Medium weakly colored and color only visible against white background | Plastic article decolored, remaining color intensity ≥ 75% and < 90% |
| 3 | medium recognizable colored | Plastic article well decolored, remaining colour intensity ≥ 50% and < 75% |
| 4 | medium well recognizable colored | Plastic article very well decolored, remaining colour intensity ≥ 30% and < 50% |
| 5 | Medium heavily colored | Plastic article highly decolored, remaining colour strength < 30% |

The numbers in the left column are counted as points in the evaluation. The smaller the total number of points, the higher the color stability.

As shown in table 4 the following results for the color stability of the plastic article have been found:

Table 4

| | **1** | **C.1** | **2** | **3** | **4** | **C.2** | **5** | **6** | **7** | **C.3** |
|---|---|---|---|---|---|---|---|---|---|---|
| **MT 1.1** | 2 | 3 | 2 | 1 | 2 | 3 | 2 | 2 | 3 | 4 |
| **MT 1.2** | 1 | 3 | 2 | 1 | 1 | 3 | 2 | 2 | 2 | 3 |
| **MT 2.1** | 2 | 5 | 3 | 2 | 2 | 4 | 2 | 2 | 2 | 4 |
| **MT 2.2** | 1 | 1 | 1 | 1 | 1 | 1 | 1 | 1 | 1 | 2 |
| **MT 2.3** | 1 | 1 | 1 | 1 | 1 | 2 | 1 | 2 | 1 | 3 |
| **MT 2.4** | 2 | 5 | 3 | 2 | 2 | 4 | 2 | 2 | 2 | 4 |
| **MT 2.5** | 2 | 4 | 3 | 2 | 3 | 4 | 3 | 3 | 3 | 3 |
| **TOTAL** | **11** | **22** | **15** | **10** | **12** | **21** | **13** | **14** | **14** | **23** |

MT 1.1 - MT 2.5: Assessment of the coloring of the extraction medium (see table 2 and3) The numbers in the column are counted as points in the evaluation. The lower the total number of points (row TOTAL), the higher the color stability (see table 3).

**Decoloring of the plastic articles**

The plastic articles produced according to the above exemplary examples 1 to 7 and C1 to C3 have been decolored according to the method for decoloring using the following decolor conditions:

Decoloring of Example 1 to 3 and C.2

For the decoloring of the plastic articles NaOH (caustic soda lye) as key agent is used. The concentration of the key agent in the polar solvent is 0,11 mol/L and the pH is > 7. The plastic articles are shredded to a flake size of approximately 5 mm. Afterwards the flakes are heated in an autoclave in a solution of 4 mL/L of a benzyl benzoate as dispersing agent, 5 g/L formamide sulfonic acid as oxidizing agent and 10 mL/L caustic soda lye 38°Bé as key agent in water for 60 min at 130°C (heating rate 2°C/min). The ratio is 10g Flakes per 100g solution. After rapid cooling, the flakes are filtered off with a coarse sieve and thoroughly rinsed with running water. After drying at 80 °C for 6h, the flakes are visually assessed and the remaining color strength is measured.

Decoloring of Example 4 to 6 and C.2

For the decoloring of the plastic articles acetic acid as key agent is used. The concentration of the key agent in the polar solvent is 0,5 mol/L and the pH is < 7. The plastic articles are shredded to a flake size of approx. 5 mm. Afterwards the flakes are heated in a vessel in a solution of 3,0 g/L zinc hydroxymethasulphinate as oxidizing agent, 2 g/L of formic acid (85%) as dispersing agent and 30g/L acetic acid (96%) as key agent in water for 30 min at 98°C (heating rate 1°C/min). The ratio is 10g flakes per 100g solution. After rapid cooling, the flakes are filtered off with a coarse sieve and thoroughly rinsed with running water. After drying at 80°C for 6h, the flakes are visually assessed and the remaining color strength is measured.

Decoloring of Example 7 and C.3

For the decoloring of the plastic articles $Al(OH)_3$ as key agent is used. The concentration of the key agent in the polar solvent is 0,38 mol/L. The plastic articles are shredded to a flake size of approx. 5 mm. Afterwards the flakes are heated in a vessel in a solution of 30g/L $Al(OH)_3$ as key agent, 10 g/l $CaCO_3$ and 10 mL/L caustic soda lye 38°Bé in water for 60min at 130°C (heating rate 2°C/min). The ratio is 10g flakes per 100g solution. After rapid cooling, the flakes are filtered off with a coarse sieve and thoroughly rinsed with running water. After drying at 80°C for 6h, the flakes are visually assessed and the remaining color strength is measured.

The decolorability of the plastic articles was assessed by measuring the percentage loss of color strength K/S according to Kubelca-Munk of the flakes before and after the decoloration. Color strength according to Kubelca-Munk was measured and calculated by the spectrophotometer Konica-Minolta 3600A at max. adsorbance. The remaining color strength is calculated as follows:

$$reamining\ color\ strength = 1 - \frac{(color\ strength\ before - color\ strength\ after)}{color\ strength\ before}\ in\ \%$$

As shown in table 5 the following results for the decoloring of the plastic article have been found:

Table 5

| | 1 | C.1 | 2 | 3 | 4 | C.2 | 5 | 6 | 7 | C.3 |
|---|---|---|---|---|---|---|---|---|---|---|
| **Decoloring Remaining K/S** | 23% | 20% | 22% | 22% | 7% | 5% | 6% | 6% | 13% | 12% |

**Summary of migration test (color stability) and Decoloring of the plastic articles**

According to the above test results the color stability and decoloring was grouped into excellent, good, medium, bad and unsatisfactory and summarized in the following table 6:

| Table 6 | | | | |
|---|---|---|---|---|
| Comparison of the color stability and decoloring with and without the locker agent | | | | |
| | dye | locker agent | Color stability | Decoloring |
| 1 | Dispersed Blue 56 | Citric Acid | Excellent | Good |
| C.1 | Dispersed Blue 56 | -- | Unsatisfactory | Good |
| 2 | Bemacron Blue E-FBL | Citric Acid | Good | Good |
| 3 | Disperse Blue 56 | PE-Methacrylic acid Copolymer | Excellent | Good |
| 4 | Acid Yellow 246 | polyetheramine PEA (Huntsman Jeffamin ED-2003) | Excellent | Excellent |
| C.1 | Acid Yellow 246 | -- | Unsatisfactory | Excellent |
| 5 | Bemacid Yellow E-TL | polyetheramine PEA (Huntsman Jeffamin ED-2003) | Good | Excellent |
| 6 | Acid Yellow 246 | Polydimethylaminoethylene methacrylate (PDMAEMA) | Excellent | Excellent |
| 7 | Alizarin | $Al(OH)_3$ | Good | Good |
| C.3 | Alizarin | -- | Unsatisfactory | Good |

As the results clearly show, the color stability of the plastic article is enhanced by using the locker agent without affecting the decolorability of the plastic article.

## Claims

1. Method of manufacture of a colored plastic article, wherein the method comprises the steps:

   a1) mixing a plastic basis material with a color-locker masterbatch,
   wherein the color-locker masterbatch comprises:

   - a plastic basis material and/or a carrier
   - a locker agent, and
   - a dye, wherein at least 80 % of the dye are molecularly solved in the plastic basis material or in the carrier; or

   a2) mixing a plastic basis material with a color masterbatch and with a locker masterbatch, wherein the color masterbatch comprises:

   - plastic basis material and/or a carrier,
   - a dye, wherein at least 80 % of the dye are molecularly solved in the plastic basis material or in the carrier; and

   wherein the locker masterbatch comprises:

   - plastic basis material and/or a carrier,
   - a locker agent;

   b) producing the colored plastic article by a plastic forming processing method,

   wherein the plastic basis material is based on a polar polymer or on a polymer blend comprising at least 0.5 wt.-% of a polar polymer wherein the polar polymer has a molecular weight Mw ≥ 1000 g/mol and has at least 5 wt.-% of heteroatoms based on the molecular weight of the polar polymer, and wherein heteroatoms are any atoms except C and H atoms; or
   the plastic basis material is based on a non-polar polymer and the carrier or on a polymer blend comprising at least 99.5 wt.-% of a non-polar polymer and the carrier, wherein the non-polar polymer has a molecular weight Mw ≥

1000 g/mol and has less than 5 wt.-% of heteroatoms based on the molecular weight of the non-polar polymer; wherein the carrier is a polar compound or a blend comprising at least 10 wt.-% of a polar-compound or mixtures thereof, and wherein the polar-compound has a molecular weight Mw < 1000 g/mol and has at least 5 wt.-% of heteroatoms based on the molecular weight of the polar compound,
wherein the dye has a molecular weight Mw in the range of about ≥ 250 g/mol to about ≤ 750 g/mol,
wherein the locker agent is able to reversibly form a bond to the dye,
and wherein the locker agent is selected from the group of acidic locker agents comprising acidic additives, acidic oligomers and/or acidic polymers, polyacids, and anionic polyelectrolytes; or
wherein the locker agent is selected from the group of basic locker agents comprising basic additives, basic oligomers and/or basic polymers, polybases, and cationic polyelectrolytes; or
wherein the locker agent is selected from the group comprising metal compounds.

**2.** The method according to claim 1, wherein the bond between the locker agent and the dye is not a covalent bond.

**3.** The method according to claim 1, wherein the bond between the locker agent and the dye is an ionic bond, a polar bond, a dative bond, hydrogen bond and/or based on London and/or van-der-Waals interaction between the locker agent and the dye.

**4.** The method according to any one of claims 1 to 4, wherein

- the dye has an acid dissociation constant $pK_A \geq 8$ and/or comprises at least one functional group selected from the group comprising primary amines ($RNH_2$), secondary amines (RNHR), tertiary amines ($RNR_2$), imines ($R_2C{=}NR$), hydrazones ($R_2C{=}N{-}NH_2$) and acylhydrazines ($R{-}(C{=}O)NH{-}NH_2$) and the locker agent is selected from the group of acidic locker agents; or
- the dye has an acid dissociation constant $pK_A \leq 6$ and/or comprises at least one functional group selected from the group comprising carboxylic acids (RC(=O)OH), phosphoric acids ($RP(=O)_2OH$), and sulfonic acids ($RS(=O)_2OH$), sulfinic acids (RS(=O)OH), sulfenic acids (R(S=O)H), and sulfonamides ($RSO_2NH_2$) and the locker agent is selected from the group of basic locker agents; or
- the dye has an acid dissociation constant $pK_A$ in between 6 and 8 and/or is a Lewis base and/or comprises at least one functional group selected from the group comprising hydroxyls (ROH), ethers (ROR), nitriles (RCN), oximes (R=N-OH), esters (RCOOR), carboxamides ($R(C{=}O)NH_2$), aldehydes (R(C=O)H), ketones (R(C=O)R), alkenes ($R_2C{=}CR_2$), and alkynes (RC=CR) and the locker agent is selected from the group comprising metal compounds.

**5.** The method according to any one of claims 1 to 4, wherein

- the acidic additive of the locker agent has a molecular weight about ≥ 50 to g/mol to about < 600 g/mol and is selected from the group comprising carboxylic acids with the general structure RC(=O)OH, preferably citric acid, tartaric acid, and oxalic acid, and organophosphates with the general structure $O{=}P(OH)(OR)_2$ or $O{=}P(OH)_2(OR)$, and
- the acidic oligomer, the acidic polymer, the polyacid, and/or the anionic polyelectrolyte of the locker agent have a molecular weight about ≥ 600 g/mol and are selected from the group comprising Fulvic acid, fatty acids, copolymers of acrylic- methacrylic- and ethacrylic acid, Poly(2-acrylamido-2-methyl-1-propanesulfonic acid), substituted styrenes polymers with an acid substituent in the side chain, oligo- and polyesters having carboxylic end groups, functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate)/poly(ethylene glycol) semi-IPN, and/or poly(N-isopropylacrylamide-co-acrylic acid) andpoly(acrylamide-co-acrylic acid; poly(1-naphthylamine)-camphorsulfonic acid, high-molecular sulphonates, carboxylated polyvinyl alcohols.

**6.** The method according any one of claims 1 to 5, wherein

- the basic additive of the locker agent has a molecular weight of about ≥ 50 to g/mol to about < 600 g/mol and is selected from the group comprising: primary amines ($RNH_2$), secondary amines (RNHR), tertiary amines ($RNR_2$), preferably DABCO, quaternary ammonium compounds, primary amides ($RC{=}ONH_2$), secondary

amides (RC=ONHR), tertiary amides (RC=ONR$_2$), aliphatic amines, preferably tertiary amines with long side chains such as tri-n-butylamine, aromatic amines preferably pyridine,
- the basic oligomer, the basic polymer, the polybase, and/or the cationic polyelectrolyte of the locker agent have a molecular weight about ≥ 600 g/mol and are selected from the group comprising Polyquaternium, derivates of polyamines, derivates of methylolamides, polyetheramines with one or more terminal aminogroups, poly- and oligo- amino acids such as oligo- and poly lysin, poly vinylamine (poly amino ethylene), polyamides with high amide group content such as PA2 or PA3, basic acrylates and theire copolymers such as E1205, E1206, E1207, (N,N-Dimethylaminoethylene) methacrylate (DMAEMA) and its copolymers, (N,N-Diethylaminoethylene) methacrylat (DEAEMA) and its copolymers, N-(3-Aminopropyl methacrylamide); collagen, gelatin, anion exchangers, cationic dispersing agents, polyvinylpyrrolidone, chitosan, polyureas, heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinyl pyrimidine polymers, vinyl piperidine polymers, 9-vinylcarbazole polymers, 3-vinylcarbazole polymers, 4-vinylcarbazole polymers, 1-vinylimidazole polymers, 2-methyl-1-vinylimidazole polymers, aminated polyvinyl alcohols.

**7.** The method according to any one of claims 1 to 6, wherein the metal compound of the locker agent is selected from the group comprising compounds, complexes or especially salts of metals of the second and third main group of the periodic system of elements, in particular aluminum (Al), calcium (Ca), boron (B), and transition metals of the 3d and 4d series, in particular cobalt (Co), chromium (Cr), nickel (Ni) and iron (Fe), copper (Cu), preferably aluminum hydroxide ($Al(OH_3)$), aluminum chloride ($AlCl_3$), calcium carbonate ($CaCO_3$), copper sulfate ($CuSO_4$), and iron sulfate ($Fe_2(SO_4)_3$).

**8.** The method according to any one of claims 1 to 7, wherein the dye has a molecular weight Mw in the range of about ≥ 250 g/mol to about ≤ 700 g/mol, preferably the dye has a molecular weight Mw in the range of about ≥ 270 g/mol to about ≤ 450 g/mol, and more preferably the dye has a molecular weight Mw in the range of about ≥ 285 g/mol to about ≤ 400 g/mol.

**9.** The method according to any one of claims 1 to 8, wherein the dye is selected from the group comprising phthalocyanine, polymethine, anthraquinone, indanthrone, monoazo, diazo, methine, quinophthalone, perinone, naphthalidimide indigo and thioindigo dyes.

**10.** The method according to any one of claims 1 to 9, wherein the plastic forming processing method is selected from:

- thermoplastic processing method or thermoset processing method;
- film extrusion processing method, blown cast processing method, calandered films processing method, thermoforming sheets processing method, foam extrusion processing method, profile extrusion processing method, injection molding processing method, injection blow molding processing method, injection stretch blow molding processing method, compression molding processing method, extruding processing method, thermoforming processing method, blowing processing method and/or 3D-printing processing method.

**11.** The method according to any one of claims 1 to 10, wherein the plastic basis material, the color-locker masterbatch, the color masterbatch and/or the locker masterbatch is solid under standard conditions.

**12.** Plastic article produced according to any one of claims 1 to 11.

**13.** Plastic article according to claim 12, wherein the plastic article is color stable under any or any combination of the following conditions:

- boiling in water for 10 days;
- exposure to a 2% alkaline solution (NaOH) for 8 h at 95 °C;
- exposure to a 3% acid solution (acetic acid) for 8 h at 95 °C;
- fastness to washing acc. to DIN EN ISO 105-C06 C2S;
- fastness to perspiration acc. to DIN EN ISO 105-E04;
- exposure to a solution of 20% ethanol in water for 10 days at 60 °C.

**14.** Plastic article according to any one of claims 12 or 13, wherein the plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN

16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

**15.** Plastic article according to any one of claims 12 to 14, wherein the colored plastic article is selected from the group comprising a sheet, a foil, a container, a part, a tube, a profile, a non-woven fabric, and preferably the article is selected from the group comprising rigid packaging such as bottles or jars, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

**16.** Method for decolorizing a plastic article according to claim 12, comprising the steps

- exposing the colored plastic article to a polar solvent comprising a key agent,
wherein the key agent is an acid and present in the polar solvent in a molar amount at least twice as high to the amount of dye in the plastic article,
or wherein the key agent is a base and present in the polar solvent in a molar amount at least twice as high to the amount of dye in the plastic article,
or wherein the key agent is a Lewis base and present in the polar solvent in a molar amount at least twice as high as the amount of dye in the plastic article and/or the Lewis base and the metal compound of the locker agent form a complex having a stability constant of the complex $Kf \geq 4$,
or wherein the key agent is a Lewis acid and the Lewis acid forms in the polar solvent mono atomic cations, preferably having a charge $\geq 2+$, and/or the Lewis acid and the dye form a complex having a solubility in the polar solvent of less than 0,001 g/L.

**17.** The method according to claim 16, wherein the colored plastic article comprising an acidic locker agent is decolorizable under the following decolor conditions:

- exposing the colored plastic article to the polar solvent at a temperature of about $\geq 30$ °C to about $\leq 200$ °C, wherein the polar solvent has a $pH \geq 7$ and comprises the key agent in form of a base with a $pK_A \geq 9$ and/or a $pK_A$ at least 1 $pK_A$ unit higher than the acid dissociation constant $pK_A$ of the dye, and optionally a dispersing agent and/or optionally a sequestering agent, or wherein the polar solvent has a $pH \leq 7$ and comprises the key agent in form of an acid with a $pK_A \leq 5.2$ and optionally a dispersing agent and/or optionally a sequestering agent.

**18.** The method according to claim 16, wherein the colored plastic article comprising a basic locker agent is decolorizable under the following decolor conditions:

- exposing the colored plastic article to a polar solvent at a temperature of about $\geq 30$ °C to about $\leq 200$ °C, wherein the polar solvent has a $pH \leq 7$ and comprises the key agent in form of an acid with a $pK_A \leq 5.2$ and/or a $pK_A$ at least 1 $pK_A$ unit lower than the acid dissociation constant $pK_A$ of the dye, and optionally a dispersing agent and/or optionally a sequestering agent, or
wherein the polar solvent has a $pH \geq 7$ and comprises the key agent in form of a base with a $pK_A \geq 9$ and optionally a dispersing agent and/or optionally a sequestering agent.

**19.** The method according to any one of claims 16 to 18, wherein the base of the Key agent has a molecular weight $Mw \leq 450$ g/mol, and/or wherein the acid of the Key agent has a molecular weight $Mw \leq 450$ g/mol.

**20.** The method according to claims 16, wherein the colored plastic article comprising a metal compound locker agent is decolorizable under the following decolor conditions:

- exposing the colored plastic article to a polar solvent at a temperature of about $\geq 30$ °C to about $\leq 200$ °C, wherein the polar solvent comprises the key agent in form of a Lewis base, and optionally a dispersing agent, or wherein the polar solvent comprises the key agent in form of a Lewis acid, and optionally a dispersing agent.

**21.** The method according to any one of claims 17 to 20, wherein the dispersing agent is selected from the group comprising:

- anionic tenside, preferably selected from polyphosphates, polyacrylates, aromatic sulfonates, esters with

ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acid-polymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer have a MW of 5000 to 30000 g/mol,
- a $C_1$ to $C_6$ alcohol, $C_2$ to $C_{20}$ organic acid, $C_3$ to $C_6$ ketone, $C_3$ to $C_5$ aldehyde, $C_1$ to $C_6$ alkyl, $C_3$ to $C_6$ ester, alkylene glycol alkyl ether, glycol alkyl ether; preferably glycol and glycol oligomers, ethanol, acetone, formic or acetic acid, dimethylformamide or dimethylsulfoxide,
- strongly dye-affine glazing agents such as fatty acid amine polyglycol ethers and levelling agents such as CHT Sarabid IPD.

**22.** The method according to any one of claims 17 to 19, wherein the sequestering agent is selected from the group comprising Lewis acids and Lewis bases.

Europäisches Patentamt
European Patent Office
Office européen des brevets

# EUROPEAN SEARCH REPORT

Application Number
EP 20 17 0609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 003 573 A (SITU ZHICHENG) 12 July 2019 (2019-07-12)<br>* abstract *<br>* examples 3, 4, 15; tables 3, 4, 15 *<br>* claims 1, 5, 6, 10 *<br>----- | 1-15 | INV.<br>C08J3/20<br>C08J3/22<br>C08J11/04 |
| X | CN 104 861 539 A (QINGDAO XINZHAN PLASTIC CO LTD) 26 August 2015 (2015-08-26)<br>* abstract *<br>* example 2 *<br>* claims 1-3 *<br>----- | 1-11 | |
| X | CN 103 709 665 A (QINGDAO XINZHAN PLASTIC CO LTD) 9 April 2014 (2014-04-09)<br>* abstract *<br>* claims 1-5 *<br>----- | 1-11 | |
| X | US 2014/088210 A1 (YORDE RICHARD [US] ET AL) 27 March 2014 (2014-03-27)<br>* paragraphs [0009], [0016], [0017], [0027] - [0032] *<br>* example 1 *<br>* claims 1-5, 13 *<br>----- | 16-22 | TECHNICAL FIELDS SEARCHED (IPC)<br>C08J<br>C09J |
| A | US 2006/148914 A1 (CONNOR DANIEL M [US] ET AL) 6 July 2006 (2006-07-06)<br>* abstract *<br>* claims 1, 4-6, 11, 12, 17, 23, 24 *<br>----- | 16-22 | |

The present search report has been drawn up for all claims

1

| Place of search | Date of completion of the search | Examiner |
|---|---|---|
| Munich | 23 September 2020 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 17 0609

This annex lists the patent family members relating to the patent documents cited in the above-mentioned European search report. The members are as contained in the European Patent Office EDP file on
The European Patent Office is in no way liable for these particulars which are merely given for the purpose of information.

23-09-2020

| Patent document cited in search report | Publication date | Patent family member(s) | Publication date |
|---|---|---|---|
| CN 110003573 A | 12-07-2019 | NONE | |
| CN 104861539 A | 26-08-2015 | NONE | |
| CN 103709665 A | 09-04-2014 | NONE | |
| US 2014088210 A1 | 27-03-2014 | US 2014088210 A1 | 27-03-2014 |
| | | US 2016264751 A1 | 15-09-2016 |
| | | WO 2014047620 A1 | 27-03-2014 |
| US 2006148914 A1 | 06-07-2006 | NONE | |

EPO FORM P0459

For more details about this annex : see Official Journal of the European Patent Office, No. 12/82